(19) **Europäisches Patentamt / European Patent Office / Office européen des brevets**

(11) **EP 3 454 059 B1**

(12) **EUROPEAN PATENT SPECIFICATION**

(45) Date of publication and mention
of the grant of the patent:
**05.02.2020 Bulletin 2020/06**

(51) Int Cl.:
***G01N 29/024*** *(2006.01)*

(21) Application number: **18191870.7**

(22) Date of filing: **31.08.2018**

(54) **GAS ANALYSIS METHOD AND GAS ANALYZER**

GASANALYSEVERFAHREN UND GASANALYSATOR

PROCÉDÉ D'ANALYSE DE GAZ ET ANALYSEUR DE GAZ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **07.09.2017 JP 2017171656**

(43) Date of publication of application:
**13.03.2019 Bulletin 2019/11**

(73) Proprietor: **Riken Keiki Co., Ltd.
Tokyo 174-8744 (JP)**

(72) Inventors:
• **KOJIMA, Kenichi
Kasukabe-shi, Saitama 3440057 (JP)**
• **ISHIGURO, Tomoo
Kasukabe-shi, Saitama 3440057 (JP)**

(74) Representative: **Grünecker Patent- und
Rechtsanwälte
PartG mbB
Leopoldstraße 4
80802 München (DE)**

(56) References cited:
**WO-A1-2016/104270**

EP 3 454 059 B1

**Description**

TECHNICAL FIELD

The present invention relates to a gas analysis method and a gas analyzer for analyzing a mixture gas serving as a gas to be analyzed, for example, which is predominantly composed of a methane gas and contains either one or both of a hydrogen gas and a carbon dioxide gas.

BACKGROUND ART

In recent years, research and development have been made on a technique (Power to Gas (PtG)) for producing methane gas or hydrogen gas from renewable energy, e.g., mainly sunlight or wind power and then transporting and storing the resulting methane gas or hydrogen gas.

In such a technique, the methane gas is acquired by a methanation reaction expressed by the reaction formula (1) below, e. g. , with the carbon dioxide gas and the hydrogen gas as a reaction substance. Here, in the PtG system, the carbon dioxide gas to be employed may be those that are collected in exhaust gases from various types of plants such as factories, power plants or sewage disposal plants. On the other hand, the hydrogen gas to be employed may be those that can be acquired through the electrolysis of water by the electrical power of renewable energy.

[Equation 1]

$$\text{Reaction Formula (1)} \qquad CO_2 + 4H_2 \rightleftarrows CH_4 + 2H_2O$$

In the PtG system, the methane gas produced by the methanation reaction (a synthesis gas predominantly composed of methane) has been studied to seek the operation of injecting the resulting gas into an existing town gas grid (infrastructure).

In these circumstances, since the calorific value standards of gases that can be injected into the town gas grid (the allowance of mixture of hydrogen gas and carbon dioxide gas) have been determined uniquely for each area (e.g., such as a town gas provider), it is necessary to analyze and monitor the composition of the resulting synthesis gas when the synthesis gas is injected into the existing town gas grid. In general, a gas analysis method to be employed for analysis of the composition of a natural gas may be, for example, gas chromatography (e.g., see Patent Literature 1). Patent Literature 2 discloses a method of determining the methane number of natural gases.

[Patent Literature]

[Patent Literature 1] Japanese Patent Application Laid-Open No.2005-121648
[Patent Literature 2] WO 2016/014270 A1

SUMMARY OF INVENTION

Technical Problem

However, the gas analysis method by gas chromatography is problematic as follows:

(1) when hydrogen is employed as a carrier gas, the concentration of hydrogen contained in a gas being analyzed cannot be measured, and furthermore, employing an inert gas such as helium or argon as a carrier gas may lead to an increase in measurement error; and
(2) since the method is a type of batch processes, it takes time to detect all the component gases of the gas being analyzed, and so continual measurements cannot be performed.

On the other hand, also known is such a method that employs, as a gas analysis method, a hydrogen measurement instrument into which a semiconductor sensor has been incorporated. However, there is such a problem with the gas analysis method that high measurement accuracy is available, but the response speed is slow. The response speed (T90) of the hydrogen measurement instrument with such a semiconductor sensor is, for example, approximately 60 seconds.

The present invention has been made in view of the foregoing circumstances and has as its object the provision of a gas analysis method and a gas analyzer which enable continual analysis of the compositions of a gas to be analyzed (measurement of the concentration of each component gas) with high accuracy.

According to an aspect of the present invention, there is provided a gas analysis method including computing a concentration of each component gas of a gas to be analyzed, which is a mixture gas that is predominantly composed of a methane gas and contains either one or both of a hydrogen gas and a carbon dioxide gas. The gas analysis method includes computing, by a procedure (1) and a procedure (2), the concentration of each component gas of the gas to be analyzed, wherein the procedure (1) includes computing a concentration value $X_{CO2}$ [vol%] of the carbon dioxide gas contained in the gas to be analyzed by the following equation (1),

$$\text{Equation (1)} \quad X_{CO2} = (100/k_{CO2}) \times \{(U_O - U_S)/(1 - \alpha)\},$$

where $U_O$ is a refractive index equivalent output value for a particular gas physical property which is selected from a calorific value, a density and a specific gravity, the refractive index equivalent output value being converted from a refractive index value of the gas to be analyzed; $U_s$ is a sonic speed equivalent output value for the particular gas physical property converted from a sonic speed value of the gas to be analyzed; $k_{CO2}$ is an error coefficient for the particular gas physical property of the carbon dioxide gas; and $\alpha$ is a correction factor based on a difference between a measurement error of the refractive index equivalent output value and a measurement error of the sonic speed equivalent output value, and

the procedure (2) includes computing a value U of the particular gas physical property of the gas to be analyzed by Equation (2) or Equation (3) below, on a basis of the refractive index equivalent output value $U_O$ and the sonic speed equivalent output value $U_S$:

$$\text{Equation (2)} \quad U = (U_S - \alpha \times U_O)/(1 - \alpha)$$

$$\text{Equation (3)} \quad U = (U_O - \alpha \times U_S)/(1 - \alpha),$$

and computing a concentration of the methane gas $X_{CH4}$ [vol%] and a concentration of the hydrogen gas $X_{H2}$ [vol%] , which are contained in the gas to be analyzed, by Equation (4) and Equation (5) below, on the basis of the value U of the particular gas physical property of the gas to be analyzed; the values $A_1$, $A_2$ and $A_3$ of the particular gas physical property of a methane gas, a carbon dioxide gas and a hydrogen gas of a concentration of 100 vol%; and a volume fraction of each component gas:

$$\text{Equation (4)} \quad U = (A_1 \times X_{CH4} + A_2 \times X_{CO2} + A_3 \times X_{H2})/100$$

$$\text{Equation (5)} \quad X_{CH4} + X_{CO2} + X_{H2} = 100.$$

In the gas analysis method of the present invention, any one of methods [A] to [C] below is preferably employed in the procedure (1) to compute the concentration of the carbon dioxide gas contained in the gas to be analyzed.

[A] When the particular gas physical property converted from the refractive index value and the sonic speed value of the gas to be analyzed is a calorific value, a value of a refractive index equivalent calorific value $Q_O$ [MJ/m$^3$] and a value of a sonic speed equivalent calorific value $Q_S$ [MJ/m$^3$] are employed as the refractive index equivalent output value $U_O$ and the sonic speed equivalent output value $U_s$, while a value selected from those within a range of 1.8 to 2.8 as the correction factor $\alpha$ and a value selected from those within a range of 35 to 48 as the error coefficient $k_{CO2}$ are employed.

[B] When the particular gas physical property converted from the refractive index value and the sonic speed value of the gas to be analyzed is the density, a refractive index equivalent density value $D_O$ [kg/m$^3$] and a sonic speed equivalent density value $D_S$ [kg/m$^3$] are employed as the refractive index equivalent output value $U_O$ and the sonic speed equivalent output value $U_s$, while a value selected from those within a range of 12.9 to 24.9 as the correction factor $\alpha$ and a value selected from those within a range of 0.064 to 0.089 as the error coefficient $k_{CO2}$ are employed.

[C] When the particular gas physical property converted from the refractive index value and the sonic speed value of the gas to be analyzed is the specific gravity, a refractive index equivalent specific gravity value $S_O$ relative to air and a sonic speed equivalent specific gravity value $S_S$ relative to air are employed as the refractive index equivalent output value $U_O$ and the sonic speed equivalent output value $U_s$, while a value selected from those within a range of 12.9 to 24.9 as the correction factor $\alpha$ and a value selected from those within a range of 0.050 to 0.068 as the error coefficient $k_{CO2}$ are employed.

Still furthermore, in the gas analysis method of the present invention, the gas to be analyzed is preferably a gas produced from carbon dioxide and hydrogen by methanation reaction.

According to another aspect of the present invention, there is provided a gas analyzer for computing a concentration of each component gas of a gas to be analyzed, which is a mixture gas that is predominantly composed of a methane gas and contains either one or both of a hydrogen gas and a carbon dioxide gas, and

the gas analyzer includes a gas concentration computation mechanism configured to compute the concentration of each component gas of the gas to be analyzed by the aforementioned gas analysis method.

Furthermore, the gas analyzer of the present invention preferably include: a refractive index equivalent output measurement mechanism configured to measure a refractive index of the gas to be analyzed to thereby acquire a refractive index equivalent output value for the particular gas physical property; and a sonic speed equivalent output measurement mechanism configured to measure a sonic speed of the gas to be analyzed to thereby acquire a sonic speed equivalent output value for the particular gas physical property.

ADVANTAGEOUS EFFECTS OF INVENTION

According to the gas analysis method of the present invention, a particular relational expression is employed for a gas to be analyzed, i.e., a mixture gas which is predominantly composed of a methane gas and contains either one or both of a hydrogen gas and a carbon dioxide gas, thereby detecting the concentration of the carbon dioxide gas from the refractive index and the sonic speed of the gas to be analyzed. Since the particular relational expression is set by taking into account an error caused by the carbon dioxide gas, the resulting concentration value of the carbon dioxide gas has a high reliability. Furthermore, it is possible by computation to detect the concentration of the methane gas and the concentration of the hydrogen gas with high accuracy from the value of the particular gas physical property selected from the calorific value, the density and the specific gravity which is calculated from the refractive index and the sonic speed of the gas to be analyzed; and the detected concentration value of the carbon dioxide.

Furthermore, since the concentration of each component gas of the gas to be analyzed is detected by computation, it is possible to achieve a high response speed and perform continual measurements.

According to the gas analyzer of the present invention in which the aforementioned gas analysis method is executed, the analysis of compositions of the gas to be analyzed can be continually performed with high accuracy.

Furthermore, the gas analyzer may be provided with the refractive index equivalent output measurement mechanism and the sonic speed equivalent output measurement mechanism to thereby continuously detect the compositions of the gas to be analyzed in keeping with the actual situation. It is thus possible to monitor variations in composition of the gas to be analyzed.

BRIEF DESCRIPTION OF DRAWINGS

[FIG. 1] is a block diagram schematically illustrating a configuration of an example of a gas analyzer according to the present invention.
[Fig. 2] is a conceptual diagram schematically illustrating a configuration of an example of a PtG system.

DESCRIPTION OF EMBODIMENTS

Embodiments of the present invention will next be described in more detail.

A gas analysis method and a gas analyzer of the present invention are developed to analyze a mixture gas, as a gas to be analyzed, which is predominantly composed of a methane gas and contains either one or both of a hydrogen gas and a carbon dioxide gas. The gas to be analyzed has a methane concentration of not lower than 70.0 vol% and lower than 100.0 vol%, a hydrogen concentration of not lower than 0 vol% and not more than 20.0 vol%, and a carbon dioxide concentration of not lower than 0 vol% and not more than 30.0 vol%.

As specific examples of such a mixture gas, may be mentioned a gas produced from carbon dioxide and hydrogen through a methanation reaction and a synthesis gas predominantly composed of methane (hereafter, to be also referred to as "a synthesis methane gas").

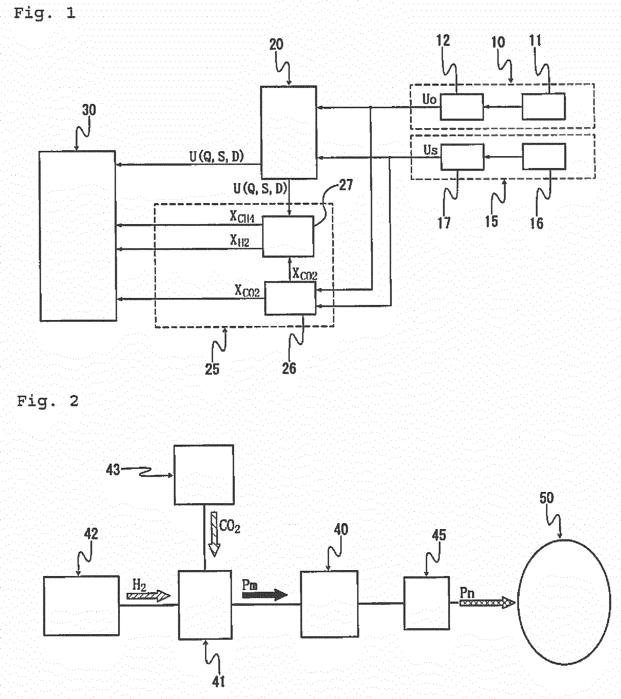

Fig. 1 is a block diagram schematically illustrating a configuration of an example of a gas analyzer according to the present invention.

The gas analyzer of this example includes: a refractive index equivalent output measurement mechanism 10 configured to acquire a refractive index equivalent output value $U_O$ for a particular gas physical property determined from the refractive index value of a gas to be analyzed; a sonic speed equivalent output measurement mechanism 15 configured to acquire a sonic speed equivalent output value $U_S$ for the particular gas physical property determined from the sonic speed value of the gas to be analyzed; a gas physical property computation mechanism 20 configured to compute a value U of the particular gas physical property the gas to be analyzed; a gas concentration computation mechanism 25 configured to compute the concentration of each component gas in the gas to be analyzed; and a display mechanism 30 configured to display information such as the concentration and the particular gas physical property of each component gas in the gas to be analyzed.

The particular gas physical property converted from the refractive index value and the sonic speed value of the gas to be analyzed has a particular relation with the carbon dioxide concentration, for example, with one that is selected from the calorific value, the density and the specific gravity.

The refractive index equivalent output measurement mechanism 10 includes a refractive index measurement unit 11 configured to measure the refractive index of the gas to be analyzed and a refractive index equivalent output acquirement unit 12 configured to determine the refractive index equivalent output value $U_O$ for the particular gas physical property on the basis of the refractive index value measured by the refractive index measurement unit 11.

For example, the refractive index measurement unit 11 may employ a light wave interferometer which detects, as a displacement of interference fringes, the difference in optical refractive index between the gas to be analyzed and a reference gas such as air, and then on the basis of the amount of displacement, measures the refractive index of the gas to be analyzed.

For example, in the case of a particular gas composed only of a paraffinic hydrocarbon gas, the refractive index equivalent output acquirement unit 12 computes a refractive index equivalent output $U_O$ of the particular gas physical property with the help of the correlation between the refractive index of the particular gas and the particular gas physical property, which has been acquired in advance, e.g., by graphing. More specifically, acquired in advance is at least one of the correlation between the refractive index and the calorific value of the particular gas, the correlation between the refractive index and the density of the particular gas, and the correlation between the refractive index and the specific gravity of the particular gas. Thus, the correlation with a selected particular gas physical property is employed. Then, assuming that the gas to be analyzed is the particular gas, the refractive index value of the particular gas is checked against the selected correlation to thereby compute the refractive index equivalent output $U_O$ for the particular gas physical property selected from the calorific value, the density and the specific gravity. Here, it is not necessary to acquire the correlations between the refractive index and all the gas physical properties, i.e., the calorific value, the density and the specific gravity, but the correlation between any one gas physical property and the refractive index may only have to be acquired.

The sonic speed equivalent output measurement mechanism 15 includes: a sonic speed measurement unit 16 configured to measure the propagation speed of sound waves through the gas to be analyzed (the sonic speed of the gas to be analyzed); and a sonic speed equivalent output acquirement unit 17 configured to determine the sonic speed equivalent output value Us on the basis of the sonic speed value measured by the sonic speed measurement unit 16.

For example, as the sonic speed measurement unit 16, it is possible to employ an ultrasonic sensor configured to measure, with the gas to be analyzed flowing through a measurement pipe which has a sound wave transmission source provided on one end and a sound wave reception source provided on the other end, the time (propagation time) in which sound waves from the sound wave transmission source propagate through the gas to be analyzed reach the sound wave reception source and then determine the sonic speed from the value of the propagation time.

For example, in the case of a particular gas composed only of a paraffinic hydrocarbon gas, the sonic speed equivalent output acquirement unit 17 computes the sonic speed equivalent output value $U_S$ of the particular gas physical property with the help of the correlation between the sonic speed of the particular gas and the particular gas physical property, which has been acquired in advance, e.g., by graphing. More specifically, acquired in advance are the correlation between the sonic speed and the calorific value of the particular gas, the correlation between the sonic speed and the density of the particular gas, and the correlation between the sonic speed and the specific gravity of the particular gas. Thus, the correlation with the selected particular gas physical property is employed. Then, assuming that the gas to be analyzed is the particular gas, the sonic speed value of the particular gas is checked against the selected correlation to thereby compute the sonic speed equivalent output value $U_S$ for the particular gas physical property selected from the calorific value, the density and the specific gravity.

The gas physical property computation mechanism 20 computes a value U of the particular gas physical property of the gas to be analyzed, by Equation (2) or Equation (3) below, on the basis of the refractive index equivalent output value Uo acquired by the refractive index equivalent output measurement mechanism 10 and the sonic speed equivalent output value $U_S$ acquired by the sonic speed equivalent output measurement mechanism 15.

$$\text{Equation (2)} \quad U = (U_S - \alpha \times U_O)/(1 - \alpha)$$

$$\text{Equation (3)} \quad U = (U_O - \alpha \times U_S)/(1 - \alpha)$$

When the particular gas physical property to be finally acquired is "the calorific value", employed as the refractive index equivalent output value $U_O$ and the sonic speed equivalent output value $U_S$ in Equation (2) above are a value of a refractive index equivalent calorific value $Q_O$ and a value of a sonic speed equivalent calorific value $Q_S$, respectively. The value of the refractive index equivalent calorific value $Q_O$ and the value of the sonic speed equivalent calorific value $Q_S$ are used in the calculation in the unit of $[MJ/m^3]$. Note that the calorific value may be either a total heat value or a true heat value.

Furthermore, when the particular gas physical property is "the density", employed as the refractive index equivalent output value $U_O$ and the sonic speed equivalent output value $U_S$ in Equation (3) above are a refractive index equivalent density value $D_O$ and a sonic speed equivalent density value $D_S$, respectively. The refractive index equivalent density value $D_O$ and the sonic speed equivalent density value $D_S$ are used in the calculation in the unit of $[kg/m^3]$.

Still furthermore, when the particular gas physical property is "the specific gravity" relative to air, employed as the refractive index equivalent output value Uo and the sonic speed equivalent output value $U_S$ in Equation (3) above are a refractive index equivalent specific gravity value So and a sonic speed equivalent specific gravity value $S_S$, respectively.

In Equation (2) and Equation (3) above, $\alpha$ is the correction factor that is expressed by a value based on the difference in the magnitude of measurement error occurring between the refractive index equivalent output value $U_O$ and the sonic speed equivalent output value $U_S$ caused by carbon dioxide being contained as a miscellaneous gas component in the gas to be analyzed. More specifically, the correction factor $\alpha$ is expressed by the ratio value of the measurement error of the sonic speed equivalent output value $U_S$ to the measurement error of the refractive index equivalent output value $U_O$ and selected depending on the composition of the gas to be analyzed.

When the particular gas physical property that is finally acquired is "the calorific value", the correction factor $\alpha$ to be employed may be selected from values, e.g., within a range of 1.8 to 2.8, more preferably within a range of 2.1 to 2.4.

Furthermore, when the particular gas physical property is "the density", the correction factor $\alpha$ to be employed may be selected from values, e.g., within a range of 12.9 to 24.9, more preferably within a range of 14.7 to 20.1.

Still furthermore, when the particular gas physical property is "the specific gravity", the correction factor $\alpha$ to be employed may be selected from values, e.g., within a range of 12.9 to 24.9, more preferably within a range of 14.7 to 20.1.

When the value of the correction factor $\alpha$ is excessively small or excessively large, the measurement error occurring in each of the refractive index equivalent output value $U_O$ and the sonic speed equivalent output value $U_S$ cannot be sufficiently corrected. This may lead to a measurement error in the value U of the particular gas physical property, which is to be finally acquired, of the gas to be analyzed.

The gas concentration computation mechanism 25 has a carbon dioxide concentration computation mechanism 26 configured to compute the concentration of a carbon dioxide gas contained in the gas to be analyzed and a methane concentration and hydrogen concentration computation mechanism 27 configured to compute the concentration of a methane gas and the concentration of a hydrogen gas contained in the gas to be analyzed.

The carbon dioxide concentration computation mechanism 26 computes the concentration of the carbon dioxide gas contained in the gas to be analyzed, by Equation (1) below, on the basis of the refractive index equivalent output value $U_O$ acquired by the refractive index equivalent output measurement mechanism 10 and the sonic speed equivalent output value $U_S$ acquired by the sonic speed equivalent output measurement mechanism 15.

$$\text{Equation (1)} \quad X_{CO2} = (100/k_{CO2}) \times \{(U_O - U_S)/(1 - \alpha)\}$$

In Equation (1) above, $X_{CO2}$ is the concentration value of the carbon dioxide gas [vol%], $k_{CO2}$ is the error coefficient for the carbon dioxide gas, and $\alpha$ is a correction factor based on the difference between the measurement error of the refractive index equivalent output value and the measurement error of the sonic speed equivalent output value. $U_O$ is the refractive index equivalent output value for the particular gas physical property, and $U_S$ is the sonic speed equivalent output value for the particular gas physical property.

The error coefficient $k_{CO2}$ for the carbon dioxide gas is a value indicative of the magnitude of the influence of an error that the carbon dioxide gas exerts as a miscellaneous gas component on the refractive index measurement unit 11 (the refractive index value of the gas to be analyzed). For example, the error coefficient $k_{CO2}$ can be set on the basis of the refractive index equivalent output value for the particular gas physical property that is converted from the refractive index value actually measured for a carbon dioxide gas of a concentration of 100 vol%.

When the particular gas physical property related to the refractive index equivalent output value $U_O$ and the sonic speed equivalent output value $U_S$ is "the calorific value" (or when the value of the refractive index equivalent calorific value $Q_O$ and the value of the sonic speed equivalent calorific value $Q_S$ are employed), the error coefficient $k_{CO2}$ to be employed is selected from values, e.g. , within a range of 35 to 48. Furthermore, like the case where the particular gas physical property is computed by Equation (2) above, the correction factor $\alpha$ to be employed is selected from values, e.g., within a range of 1.8 to 2.8, more preferably within a range of 2.1 to 2.4.

Furthermore, when the particular gas physical property is "the density" (or when the refractive index equivalent density value $D_O$ and the sonic speed equivalent density value $D_S$ are employed), the error coefficient $k_{CO2}$ to be employed is selected from values, e.g., within a range of 0.064 to 0.089, and the correction factor $\alpha$ to be employed is selected from values, e.g. , within a range of 12.9 to 24.9, more preferably within a range of 14.7 to 20.1.

Still furthermore, when the particular gas physical property is "the specific gravity" relative to air (or when the refractive index equivalent specific gravity value So and the sonic speed equivalent specific gravity value Ss are employed), the error coefficient $k_{CO2}$ to be employed is selected from values, e.g., within a range of 0.050 to 0.068, and the correction factor $\alpha$ to be employed is selected from values, e.g., within a range of 12.9 to 24.9, more preferably within a range of 14.7 to 20.1.

When the value of the error coefficient $k_{CO2}$ is excessively small or excessively large, the measurement error occurring in each of the refractive index equivalent output value $U_O$ and the sonic speed equivalent output value $U_S$ cannot be sufficiently corrected. This may lead to a measurement error in the finally acquired concentration value of the carbon dioxide gas $X_{CO2}$.

Likewise, when the value of the correction factor $\alpha$ is excessively small or excessively large, the measurement error occurring in each of the refractive index equivalent output value $U_O$ and the sonic speed equivalent output value $U_S$ cannot be sufficiently corrected. This may lead to a measurement error in the finally acquired concentration value of the carbon dioxide gas $X_{CO2}$.

The methane concentration and hydrogen concentration computation mechanism 27 computes the concentration of a methane gas and the concentration of a hydrogen gas contained in the gas to be analyzed, by Equation (4) and Equation (5) below, on the basis of the value of the particular gas physical property of the gas to be analyzed, which is computed on the basis of the refractive index equivalent output value $U_O$ and the sonic speed equivalent output value $U_S$, the value of the particular gas physical property of each component gas in the gas to be analyzed, and the volume fraction of each component gas.

$$\text{Equation (4)} \quad U = (A_1 \times X_{CH4} + A_2 \times X_{CO2} + A_3 \times X_{H2})/100$$

$$\text{Equation (5)} \quad X_{CH4} + X_{CO2} + X_{H2} = 100$$

In Equation (4) above, U is the value of the particular gas physical property of the gas to be analyzed. $A_1$ to $A_3$ are the values of the particular gas physical property of a methane gas, a carbon dioxide gas and a hydrogen gas of a concentration of 100 vol%, respectively. $X_{CH4}$ is the concentration value of the methane gas [vol%], and $X_{H2}$ is the concentration value of the hydrogen gas [vol%].

When the particular gas physical property is "the calorific value" (or when the value of the calorific value Q calculated on the basis of the value of the refractive index equivalent calorific value $Q_O$ and the value of the sonic speed equivalent calorific value $Q_S$ is employed), $A_1$ to be employed is the value of the calorific value (e.g., the total heat value) of the methane gas selected from values within a range of 33.428 to 39.936 depending on the combustion reference temperature and the measurement reference temperature, and $A_3$ to be employed is the value of the calorific value (e.g. , the total heat value) of the hydrogen gas selected from values within a range of 10.053 to 12.788 depending on the combustion reference temperature and the measurement reference temperature. The value $A_2$ is "0" because the value of the calorific value of the carbon dioxide gas is 0.

Note that the value of the calorific value to be used in the calculation may also be the true heat value.

Furthermore, when the particular gas physical property is "the density" (or when the density value D calculated on the basis of the refractive index equivalent density value $D_O$ and the sonic speed equivalent density value $D_S$ is employed), $A_1$ to be employed is the density value of the methane gas selected from values within a range of 0.6682 to 0.7175 depending on the combustion reference temperature and the measurement reference temperature. $A_2$ to be employed is the density value of the carbon dioxide gas selected from values within a range of 0.0838 to 0.0899 depending on the combustion reference temperature and the measurement reference temperature. $A_3$ to be employed is the density value of the hydrogen gas selected from values within a range of 1.8393 to 1.9768 depending on the combustion reference temperature and the measurement reference temperature.

Still furthermore, when the particular gas physical property is "the specific gravity" relative to air (or when the specific gravity value S calculated on the basis of the refractive index equivalent specific gravity value $S_O$ and the sonic speed equivalent specific gravity value $S_S$ is employed), $A_1$ to be employed is the specific gravity value of the methane gas relative to air (0.5550) ; $A_2$ to be employed is the specific gravity value of the carbon dioxide gas relative to air (1.5300) ; and $A_3$ to be employed is the specific gravity value of the hydrogen gas relative to air (0.0696).

In the gas analyzer described above, the gas to be analyzed is supplied to each of the refractive index equivalent output measurement mechanism 10 and the sonic speed equivalent output measurement mechanism 15, and for example, a reference gas such as air is supplied to the refractive index equivalent output measurement mechanism 10. In the refractive index equivalent output measurement mechanism 10, this allows the refractive index measurement unit 11 to measure the refractive index of the gas being analyzed, so that on the basis of the result, the refractive index equivalent output acquirement unit 12 determines the refractive index equivalent output value $U_O$ for the particular gas physical property. Furthermore, in the sonic speed equivalent output measurement mechanism 15, the sonic speed of the gas being analyzed is measured by the sonic speed measurement unit 16, so that on the basis of the result, the sonic speed equivalent output acquirement unit 17 determines the sonic speed equivalent output value $U_S$ for the particular gas physical property.

On the basis of the refractive index equivalent output value Uo and the sonic speed equivalent output value $U_S$ for mutually the same gas physical property and the value of the error coefficient $k_{CO2}$ for carbon dioxide, which have been acquired as described above, the carbon dioxide concentration computation mechanism 26 computes, by Equation (1) above, the concentration value $X_{CO2}$ of the carbon dioxide gas contained in the gas being analyzed, on the condition of employing, as the correction factor $\alpha$, a value selected within a particular range.

On the other hand, on the basis of the refractive index equivalent output value $U_O$ and the sonic speed equivalent output value $U_S$, the gas physical property computation mechanism 20 computes, by Equation (2) or (3) above, the value U of the particular gas physical property of the gas being analyzed, on the condition of employing a value selected within a particular range as the correction factor $\alpha$.

Then, on the basis of the value U of the particular gas physical property acquired by the gas physical property computation mechanism 20, the value of the particular gas physical property of each component gas of the gas being analyzed, and the volume fraction of each component gas, the methane concentration and hydrogen concentration computation mechanism 27 computes, by Equation (4) and Equation (5) above, the concentration value $X_{CH4}$ of the methane gas and the concentration value $X_{H2}$ of the hydrogen gas, which are contained in the gas being analyzed. The volume fraction of the carbon dioxide gas to be employed is the carbon dioxide gas concentration value $X_{CO2}$ acquired by the carbon dioxide concentration computation mechanism 26.

The value U of the particular gas physical property of the gas being analyzed and the concentration values $X_{CO2}$, $X_{CH4}$ and $X_{H2}$ of each gas component in the gas being analyzed, which have been acquired as described above, are displayed on the display mechanism 30. In the foregoing, when all the gas physical properties of the gas being analyzed, i.e., the calorific value, the density and the specific gravity are computed, all the gas physical property values Q, D, S may be displayed at the same time or switchably on the display mechanism 30. The same holds true for the concentration values $X_{CO2}$, $X_{CH4}$, $X_{H2}$ of the respective gas components.

Thus, the gas analysis method described above can be employed to detect the carbon dioxide gas concentration value $X_{CO2}$, by Equation (1) above, of a gas to be analyzed, which is a mixture gas that is predominantly composed of a methane gas and contains either one or both of a hydrogen gas and a carbon dioxide gas, with high accuracy. Specifically, the gas analysis method can be employed to detect the carbon dioxide gas concentration value $X_{CO2}$ on the basis of the refractive index equivalent output value $U_O$ for the particular gas physical property converted from the refractive index value of the gas to be analyzed and the sonic speed equivalent output value $U_S$ for the particular gas physical property converted from the sonic speed value of the gas to be analyzed, on the condition of employing a value selected within a particular range as the value of the error coefficient $k_{CO2}$ for the carbon dioxide gas and the value of the correction factor $\alpha$. Furthermore, on the basis of the value U of the particular gas property calculated from the refractive index equivalent output value $U_O$ and the sonic speed equivalent output value $U_S$ for the particular gas physical property and the detected carbon dioxide gas concentration value $X_{CO2}$, the concentration value $X_{CH4}$ of the methane gas and the concentration value $X_{H2}$ of the hydrogen gas can be detected by computation with high accuracy.

Still furthermore, the refractive index value and the sonic speed value acquired by the refractive index measurement unit 11 and the sonic speed measurement unit 16, each configured from a physical sensor, are employed to detect by computation the concentration of each component gas of the gas to be analyzed. It is thus possible to provide high response speeds and perform continual measurements. Furthermore, since the physical sensor is impervious to deterioration in sensitivity, it is possible to perform gas analysis with high reliability.

As described above, according to the gas analyzer in which the aforementioned gas analysis method is executed, it is possible to continually perform, with high accuracy, the analysis of compositions of the gas to be analyzed (the measurement of the concentration of each component gas). Thus, for example, in a PtG (Power to Gas) system as illustrated in Fig. 2, the method is preferred when performing the composition analysis of a synthesis methane gas Pm acquired by a methanation device 41. That is, according to the aforementioned gas analyzer, the composition of the synthesis methane gas Pm can be continuously detected in keeping with the actual situation of the PtG system. It is thus possible to monitor variations in the composition of the synthesis methane gas Pm acquired by the methanation device 41. For this reason, it is expected that the aforementioned gas analyzer 40 may be capable of appropriately performing the processing, such as calorific value adjustment, that is required to inject the resulting synthesis methane gas Pm as a synthesis gas Pn that is compliant with, e.g., the regulations of an existing town gas grid 50. In Fig. 2, illustrated are a hydrogen gas supply source 42 which is configured from, e.g., a water electrolysis device that takes advantage of renewable energy; a carbon dioxide gas supply source 43 which is configured from, e.g., a carbon dioxide collection system for collecting carbon dioxide from an exhaust gas of various types of plants; the aforementioned gas analyzer 40; and a processor 45 for performing calorific value adjustment of the synthesis methane gas Pm.

In the foregoing, the embodiments of the present invention have been described; however, the present invention is not limited to the aforementioned embodiments, but various modifications may be made thereto.

For example, it is not necessary for the gas analyzer itself to include the refractive index measurement unit and the sonic speed measurement unit. It is thus also acceptable to measure both the refractive index and the sonic speed of the gas to be analyzed by an appropriate optical sensor and sonic speed sensor, and to allow entry of data thus acquired.

Next, a description will be given of an experimental example of the present invention.

[Experimental Example 1]

Five types (A to E) of sample gases having the respective gas compositions shown in Table 1 below were prepared. The calorific values (theoretical values) in Table 1 were calculated in accordance with JIS K2301:1995 from the concentration of each component gas of the sample gases.

Then, using the gas analyzer configured as illustrated in Fig. 1, the concentration of each component gas in each of the sample gases A to E was determined. To compute the concentration of carbon dioxide in a sample gas, the value of the refractive index equivalent calorific value $Q_O$ and the value of the sonic speed equivalent calorific value $Q_S$ were used in Equation (1) above, with the value of the error coefficient $k_{CO_2}$ being 40.66 and the value of the correction factor $\alpha$ being 2.21. Furthermore, to compute the methane concentration and the hydrogen concentration of the sample gas, the $A_1$ to $A_3$ values in Equation (4) above were each set depending on the combustion reference temperature and the measurement reference temperature. The results are shown in Table 2 below.

[Table 1]

| SAMPLE GAS | COMPOSITION [vol%] | | | CALORIFIC VALUE (THEORETICAL VALUE) [MJ/m³] |
|---|---|---|---|---|
| | $CO_2$ | $CH_4$ | $H_2$ | |
| A | 20.0 | 80.0 | 0.0 | 31.94 |
| B | 2.5 | 87.5 | 10.0 | 36.21 |
| C | 0.0 | 96.0 | 4.0 | 38.85 |
| D | 0.0 | 80.0 | 20.0 | 34.49 |
| E | 10.0 | 70.0 | 20.0 | 30.49 |

[Table 2]

| SAMPLE GAS | REFRACTIVE INDEX EQUIVALENT CALORIFIC VALUE [MJ/M³] | SONIC SPEED EQUIVALENT CALORIFIC VALUE [MJ/m³] | CONCENTRATION [vol%] | | | CALORI FIC VALUE (MEASUREMENT VALUE) [MJ/m³] |
|---|---|---|---|---|---|---|
| | | | $CO_2$ | $CH_4$ | $H_2$ | |
| A | 40.015 | 50.102 | 20.1 | 79.7 | 0.2 | 31.86 |
| B | 37.210 | 38.383 | 2.4 | 87.5 | 10.1 | 36.24 |
| C | 38.824 | 38.685 | 0.0 | 95.9 | 4.1 | 38.83 |
| D | 34.515 | 34.415 | 0.0 | 80.0 | 20.0 | 34.51 |

(continued)

| SAMPLE GAS | REFRACTIVE INDEX EQUIVALENT CALORIFIC VALUE [MJ/M$^3$] | SONIC SPEED EQUIVALENT CALORIFIC VALUE [MJ/m$^3$] | CONCENTRATION [vol%] | | | CALORI FIC VALUE (MEASUREMENT VALUE) [MJ/m$^3$] |
|---|---|---|---|---|---|---|
| | | | $CO_2$ | $CH_4$ | $H_2$ | |
| E | 34.595 | 39.674 | 10.2 | 69.8 | 20.0 | 30.44 |

As can be seen clearly from the results above, it was confirmed that the concentration of each component gas in the sample gas can be measured with the maximum error of 0.5 vol%. Here, the concentration value of each component gas to be measured would not be practically problematic, e.g., if the error lies within a range of $\pm 1.0$ vol%. Furthermore, the time required from the introduction of a sample gas into the gas analyzer until the concentration of each component gas was detected was within 5 seconds.

[Experimental Example 2]

The concentration of each component gas in each of the sample gasses was calculated in the same manner as that in Experimental Example 1 except that the "density" was employed as the particular gas physical property to compute the concentration of each component gas in the sample gas. It was confirmed that the maximum error was 0.5 vol%. To compute the concentration of carbon dioxide, the value of the refractive index equivalent density $D_O$ and the value of the sonic speed equivalent density $D_S$ were used in Equation (1) above, with the value of the error coefficient $k_{CO2}$ being 0.07308 and the value of the correction factor $\alpha$ being 16.7. Furthermore, to compute the methane concentration and the hydrogen concentration of the sample gas, the $A_1$ to $A_3$ values in Equation (4) above were each set depending on the combustion reference temperature and the measurement reference temperature.
Furthermore, the time required from the introduction of a sample gas into the gas analyzer until the concentration of each component gas was detected was within 5 seconds.

[Experimental Example 3]

The concentration of each component gas in each of the sample gasses was calculated in the same manner as that in Experimental Example 1 except that the "specific gravity" was employed as the particular gas physical property to compute the concentration of each component gas in the sample gas. It was confirmed that the maximum error was 0.5 vol%. To compute the concentration of carbon dioxide, the value of the refractive index equivalent specific gravity $S_O$ and the value of the sonic speed equivalent specific gravity $S_S$ were used in Equation (1) above, with the value of the error coefficient $k_{CO2}$ being 0.05652 and the value of the correction factor $\alpha$ being 16.7. Furthermore, to compute the methane concentration and the hydrogen concentration of the sample gas, the $A_1$ to $A_3$ values in Equation (4) above were each set depending on the combustion reference temperature and the measurement reference temperature.
Furthermore, the time required from the introduction of a sample gas into the gas analyzer until the concentration of each component gas was detected was within 5 seconds.

REFERNCE SIGNS LIST

10 refractive index equivalent output measurement mechanism
11 refractive index measurement unit
12 refractive index equivalent output acquirement unit
15 sonic speed equivalent output measurement mechanism
16 sonic speed measurement unit
17 sonic speed equivalent output acquirement unit
20 gas physical property computation mechanism
25 gas concentration computation mechanism
26 carbon dioxide concentration computation mechanism
27 methane concentration and hydrogen concentration computation mechanism
30 display mechanism
40 gas analyzer
41 methanation device

42 hydrogen gas supply source
43 carbon dioxide gas supply source
45 processor
50 town gas grid

**Claims**

1. A gas analysis method for computing a concentration of each component gas of a gas to be analyzed, which is a mixture gas that is predominantly composed of a methane gas and contains either one or both of a hydrogen gas and a carbon dioxide gas, the gas analysis method comprising computing, by a procedure (1) and a procedure (2), the concentration of each component gas of the gas to be analyzed, wherein
the procedure (1) includes computing a concentration value $X_{CO2}$ [vol%] of the carbon dioxide gas contained in the gas to be analyzed by the following equation (1),

$$\text{Equation (1)} \quad X_{CO2} = (100/k_{CO2}) \times \{(U_O - U_s)/(1-\alpha)\},$$

where $U_O$ is a refractive index equivalent output value for a particular gas physical property which is selected from a calorific value, a density and a specific gravity, the refractive index equivalent output value being converted from a refractive index value of the gas to be analyzed; $U_s$ is a sonic speed equivalent output value for the particular gas physical property converted from a sonic speed value of the gas to be analyzed; $k_{CO2}$ is an error coefficient for the particular gas physical property of the carbon dioxide gas; and $\alpha$ is a correction factor based on a difference between a measurement error of the refractive index equivalent output value and a measurement error of the sonic speed equivalent output value, and
the procedure (2) includes computing a value U of the particular gas physical property of the gas to be analyzed by Equation (2) or Equation (3) below, on a basis of the refractive index equivalent output value $U_O$ and the sonic speed equivalent output value Us:

$$\text{Equation (2)} \qquad U = (U_S - \alpha \times U_O)/(1 - \alpha)$$

$$\text{Equation (3)} \qquad U = (U_O - \alpha \times U_s)/(1 - \alpha),$$

and computing a concentration of the methane gas $X_{CH4}$ [vol%] and a concentration of the hydrogen gas $X_{H2}$ [vol%], which are contained in the gas to be analyzed, by Equation (4) and Equation (5) below, on a basis of a value U of the particular gas physical property of the gas to be analyzed; the values $A_1$, $A_2$ and $A_3$ of the particular gas physical property of a methane gas, a carbon dioxide gas and a hydrogen gas of a concentration of 100 vol%; and a volume fraction of each component gas:

$$\text{Equation (4)} \quad U = (A_1 \times X_{CH4} + A_2 \times X_{CO2} + A_3 \times X_{H2})/100$$

$$\text{Equation (5)} \quad X_{CH4} + X_{CO2} + X_{H2} = 100 \,.$$

2. The gas analysis method according to claim 1, wherein, in the procedure (1), when the particular gas physical property converted from the refractive index value and the sonic speed value of the gas to be analyzed is a calorific value, a value of a refractive index equivalent calorific value Qo [MJ/m$^3$] and a value of a sonic speed equivalent calorific value $Q_S$ [MJ/m$^3$] are employed as the refractive index equivalent output value $U_O$ and the sonic speed equivalent output value $U_s$, and a value selected from those within a range of 1.8 to 2.8 as the correction factor $\alpha$ and a value selected from those within a range of 35 to 48 as the error coefficient $k_{CO2}$ are employed.

3. The gas analysis method according to claim 1, wherein, in the procedure (1), when the particular gas physical property converted from the refractive index value and the sonic speed value of the gas to be analyzed is the density, a refractive index equivalent density value Do [kg/m$^3$] and a sonic speed equivalent density value $D_S$ [kg/m$^3$] are

employed as the refractive index equivalent output value $U_O$ and the sonic speed equivalent output value $U_s$, and a value selected from those within a range of 12.9 to 24.9 as the correction factor $\alpha$ and a value selected from those within a range of 0.064 to 0.089 as the error coefficient $k_{CO2}$ are employed.

4. The gas analysis method according to claim 1, wherein, in the procedure (1), when the particular gas physical property converted from the refractive index value and the sonic speed value of the gas to be analyzed is the specific gravity, a refractive index equivalent specific gravity value $S_O$ relative to air and a sonic speed equivalent specific gravity value $S_S$ relative to air are employed as the refractive index equivalent output value $U_O$ and the sonic speed equivalent output value $U_s$, and a value selected from those within a range of 12.9 to 24.9 as the correction factor $\alpha$ and a value selected from those within a range of 0.050 to 0.068 as the error coefficient $k_{CO2}$ are employed.

5. The gas analysis method according to any of claims 1 to 4, wherein the gas to be analyzed is a gas produced from carbon dioxide and hydrogen by methanation reaction.

6. A gas analyzer for computing a concentration of each component gas of a gas to be analyzed, which is a mixture gas that is predominantly composed of a methane gas and contains either one or both of a hydrogen gas and a carbon dioxide gas,
the gas analyzer comprising a gas concentration computation mechanism (25) configured to compute the concentration of each component gas of the gas to be analyzed by the gas analysis method according to any of claims 1 to 5.

7. The gas analyzer according to claim 6, comprising: a refractive index equivalent output measurement mechanism (10) configured to measure a refractive index of the gas to be analyzed to thereby acquire a refractive index equivalent output value for the particular gas physical property; and a sonic speed equivalent output measurement mechanism (15) configured to measure a sonic speed of the gas to be analyzed to thereby acquire a sonic speed equivalent output value for the particular gas physical property.


**Patentansprüche**

1. Gasanalyseverfahren zum Berechnen einer Konzentration jeder Gaskomponente eines zu analysierenden Gases, bei dem es sich um ein Gasgemisch handelt, das überwiegend aus einem Methangas besteht und entweder ein Wasserstoffgas oder ein Kohlendioxidgas oder beides enthält, wobei das Gasanalyseverfahren das Berechnen der Konzentration jedes Bestandteilgases des zu analysierenden Gases durch eine Vorgehensweise (1) und eine Vorgehensweise (2) umfasst, wobei
die Vorgehensweise (1) das Berechnen eines Konzentrationswerts $X_{CO2}$ [vol%] des Kohlendioxidgases, das in dem zu analysierenden Gas enthalten ist, durch die folgende Gleichung (1) umfasst,

$$\text{Gleichung (1)} \qquad X_{CO2} = (100/k_{CO2}) \times \{(U_o - U_s)/(1 - \alpha)\},$$

wobei $U_o$ ein Brechungsindex-quivalentausgangswert für eine bestimmte physikalische Gaseigenschaft ist, der aus einem Brennwert, einer Dichte und einem spezifischen Gewicht ausgewählt ist, wobei der Brechungsindex-Äquivalentausgangswert aus einem Brechungsindexwert des zu analysierenden Gases umgewandelt wird; $U_s$ ein Schallgeschwindigkeits-Äquivalentausgangswert für die bestimmte physikalische Gaseigenschaft ist, der aus einem Schallgeschwindigkeitswert des zu analysierenden Gases konvertiert wird; $k_{CO2}$ ein Fehlerkoeffizient für die bestimmte physikalische Gaseigenschaft des Kohlendioxidgases ist; und $\alpha$ ein Korrekturfaktor ist, der auf einer Differenz zwischen einem Messfehler des Brechungsindex-Äquivalentausgangswertes und einem Messfehler des Schallgeschwindigkeits-Äquivalentausgangswerts basiert, und
die Vorgehensweise (2) das Berechnen eines Wertes U der bestimmten physikalischen Gaseigenschaft des zu analysierenden Gases durch die nachstehende Gleichung (2) oder Gleichung (3) auf der Grundlage des Brechungsindex-Äquivalentausgangswerts Uo und des Schallgeschwindigkeits-Äquivalentausgangswertes Us umfasst:

$$\text{Gleichung (2)} \qquad U = (U_S - \alpha \times U_O)/(1 - \alpha)$$

$$\text{Gleichung (3)} \qquad U = (U_O - \alpha \times U_s) / (1 - \alpha),$$

und Berechnen einer Konzentration des Methangases $X_{CH4}$ [vol%] und einer Konzentration des Wasserstoffgases $X_{H2}$ [vol%], die in dem zu analysierenden Gas enthalten sind, durch Gleichung (4) und Gleichung (5) auf der Grundlage eines Wertes U der bestimmten physikalischen Gaseigenschaft des zu analysierenden Gases; der Werte $A_1$, $A_2$ und $A_3$ der bestimmten physikalischen Gaseigenschaft eines Methangases, eines Kohlendioxidgases und eines Wasserstoffgases mit einer Konzentration von 100 Vol.-%; und eines Volumenanteils jedes Gasbestandteils:

$$\text{Gleichung (4)} \qquad U = (A_1 \times X_{CH4} + A_2 \times X_{CO2} + A_3 \times X_{H2})/100$$

$$\text{Gleichung (5)} \qquad X_{CH4} + X_{CO2} + X_{H2} = 100.$$

2. Gasanalyseverfahren nach Anspruch 1, bei dem bei der Vorgehensweise (1), wenn die bestimmte physikalische Gaseigenschaft, die aus dem Brechungsindexwert und dem Schallgeschwindigkeitswert des zu analysierenden Gases umgewandelt wird, ein Brennwert ist, ein Wert eines Brechungsindex-Äquivalentbrennwertes $Q_O$ [MJ/m$^3$] und eines Schallgeschwindigkeits-Äquivalentbrennwertes Qs [MJ/m$^3$] als der Brechungsindex-Äquivalentausgangswert $U_O$ und der Schallgeschwindigkeits-Äquivalentausgangswert $U_S$ verwendet werden und ein Wert, der aus jenen eines Bereichs von 1,8 bis 2,8 als Korrekturfaktor $\alpha$ ausgewählt wird, und ein Wert, der aus jenen eines Bereichs von 35 bis 48 ausgewählt wird, als Fehlerkoeffizient $k_{CO2}$ verwendet werden.

3. Gasanalyseverfahren nach Anspruch 1, bei dem bei der Vorgehensweise (1), wenn die bestimmte physikalische Gaseigenschaft, die aus dem Brechungsindexwert und dem Schallgeschwindigkeitswert des zu analysierenden Gases umgewandelt wird, die Dichte ist, ein Brechungsindex-Äquivalentdichtewert $D_O$ [kg/m$^3$] und ein Schallgeschwindigkeits-Äquivalentdichtewert $D_S$ [kg/m$^3$] als der Brechungsindex-Äquivalentausgangswert $U_O$ und der Schallgeschwindigkeits-Äquivalentausgangswert $U_S$ verwendet werden und ein Wert, der aus jenen innerhalb eines Bereichs von 12,9 bis 24,9 als Korrekturfaktor $\alpha$ ausgewählt wird, und ein Wert, der aus jenen eines Bereichs von 0,064 bis 0,089 ausgewählt wird, als Fehlerkoeffizient $k_{CO2}$ verwendet werden.

4. Gasanalyseverfahren nach Anspruch 1, bei dem bei der Vorgehensweise (1), wenn die bestimmte physikalische Gaseigenschaft, die aus dem Brechungsindexwert und dem Schallgeschwindigkeitswert des zu analysierenden Gases umgewandelt wird, das spezifische Gewicht ist, ein Brechungsindex-Äquivalentwert des spezifischen Gewichts $S_O$ relativ zu Luft und ein Schallgeschwindigkeits-Äquivalentwert des spezifischen Gewichts $S_S$ relativ zu Luft als der Brechungsindex-Äquivalentausgangswert $U_O$ und der Schallgeschwindigkeits-Äquivalentausgangswert $U_S$ verwendet werden und ein Wert, der aus jenen innerhalb eines Bereichs von 12,9 bis 24,9 als Korrekturfaktor $\alpha$ ausgewählt wird, und ein Wert, der aus jenen eines Bereichs von 0,050 bis 0,068 ausgewählt wird, als Fehlerkoeffizient $k_{CO2}$ verwendet werden.

5. Gasanalyseverfahren nach einem der Ansprüche 1 bis 4, bei dem das zu analysierende Gas ein durch Methanisierungsreaktion aus Kohlendioxid und Wasserstoff hergestelltes Gas ist.

6. Gasanalysator zum Berechnen einer Konzentration jedes Gasbestandteils eines zu analysierenden Gases, das ein Gasgemisch ist, das überwiegend aus einem Methangas besteht und entweder ein Wasserstoffgas oder ein Kohlendioxidgas oder beides enthält,
   wobei der Gasanalysator einen Gaskonzentrations-Berechnungsmechanismus (25) umfasst, der dazu eingerichtet ist, die Konzentration jedes Gasbestandteils des zu analysierenden Gases durch das Gasanalyseverfahren nach einem der Ansprüche 1 bis 5 zu berechnen.

7. Gasanalysator nach Anspruch 6, umfassend: einen Brechungsindex-Äquivalent-Ausgangsmessmechanismus (10), der dazu eingerichtet ist, einen Brechungsindex des zu analysierenden Gases zu messen, um dadurch einen Brechungsindex-Äquivalentausgangswert für die bestimmte physikalische Eigenschaft des Gases zu beziehen; und einen Schallgeschwindigkeits-Äquivalent-Ausgangsmessmechanismus (15), der dazu eingerichtet ist, eine Schallgeschwindigkeit des zu analysierenden Gases zu messen, um dadurch einen Schallgeschwindigkeits-Äquivalentausgangswert für die bestimmte physikalische Eigenschaft des Gases zu beziehen.

**Revendications**

1. Procédé d'analyse de gaz permettant de calculer une concentration de chaque composant gazeux d'un gaz à analyser qui est un mélange gazeux majoritairement composé de méthane gazeux et qui contient de l'hydrogène gazeux et/ou du dioxyde de carbone gazeux, le procédé d'analyse de gaz comprenant le calcul, par une procédure (1) et une procédure (2), de la concentration de chaque composant gazeux du gaz à analyser, dans lequel
la procédure (1) comprend le calcul d'une valeur de concentration $X_{CO2}$ [% en volume] du dioxyde de carbone gazeux contenu dans le gaz à analyser à l'aide de l'Équation (1) ci-après :

$$\text{Équation (1)} \qquad X_{CO2} = (100/k_{CO2}) \times \{(U_O - U_S)/(1-\alpha)\},$$

où $U_O$ est une valeur de sortie équivalente d'indice de réfraction pour une propriété physique particulière du gaz choisie parmi une valeur calorifique, une masse volumique et une gravité spécifique, la valeur de sortie équivalente d'indice de réfraction étant convertie à partir d'une valeur d'indice de réfraction du gaz à analyser ; $U_S$ est une valeur de sortie équivalente de vitesse sonique pour la propriété physique particulière du gaz, convertie à partir d'une valeur de vitesse sonique du gaz à analyser ; $k_{CO2}$ est un coefficient d'erreur pour la propriété physique particulière du dioxyde de carbone gazeux ; et $\alpha$ est un facteur de correction basé sur une différence entre une erreur de mesure de la valeur de sortie équivalente d'indice de réfraction et une erreur de mesure de la valeur de sortie équivalente de vitesse sonique, et
la procédure (2) comprend le calcul d'une valeur U de la propriété physique particulière du gaz à analyser à l'aide de l'Équation (2) ou de l'Équation (3) ci-après, sur la base de la valeur de sortie équivalente d'indice de réfraction $U_O$ et de la valeur de sortie équivalente de vitesse sonique $U_S$ :

$$\text{Équation (2)} \qquad U = (U_S - \alpha \times U_O)/(1 - \alpha)$$

$$\text{Équation (3)} \qquad U = (U_O - \alpha \times U_S)/(1 - \alpha),$$

et le calcul d'une concentration du méthane gazeux $X_{CH4}$ [% en volume] et d'une concentration de l'hydrogène gazeux $X_{H2}$ [% en volume] qui sont contenus dans le gaz à analyser, à l'aide de l'Équation (4) et de l'Équation (5) ci-après, sur la base d'une valeur U de la propriété physique particulière du gaz à analyser ; des valeurs $A_1$, $A_2$ et $A_3$ de la propriété physique particulière du méthane gazeux, du dioxyde de carbone gazeux et de l'hydrogène gazeux d'une concentration de 100 % en volume ; et d'une fraction volumique de chaque composant gazeux :

$$\text{Équation (4)} \qquad U = (A_1 \times X_{CH4} + A_2 \times X_{CO2} + A_3 \times X_{H2})/100$$

$$\text{Équation (3)} \qquad X_{CH4} + X_{CO2} + X_{H2}) = 100.$$

2. Procédé d'analyse de gaz selon la revendication 1, dans lequel, dans la procédure (1), lorsque la propriété physique particulière du gaz convertie à partir de la valeur d'indice de réfraction et de la valeur de vitesse sonique du gaz à analyser est une valeur calorifique, une valeur d'une valeur calorifique équivalente d'indice de réfraction $Q_O$ [MJ/m$^3$] et une valeur d'une valeur calorifique équivalente de vitesse sonique $Q_S$ [MJ/m$^3$] sont employées en tant que valeur de sortie équivalente d'indice de réfraction $U_O$ et valeur de sortie équivalente de vitesse sonique $U_S$, et une valeur choisie parmi celles-ci dans une plage allant de 1,8 à 2,8 est utilisée en tant que facteur de correction $\alpha$ et une valeur choisie parmi celles-ci dans une plage allant de 35 à 48 est utilisée en tant que coefficient d'erreur $k_{CO2}$.

3. Procédé d'analyse de gaz selon la revendication 1, dans lequel, dans la procédure (1), lorsque la propriété physique particulière du gaz convertie à partir de la valeur d'indice de réfraction et de la valeur de vitesse sonique du gaz à analyser est la masse volumique, une valeur de masse volumique équivalente d'indice de réfraction $D_O$ [kg/m$^3$] et une valeur de masse volumique équivalente de vitesse sonique $D_S$ [kg/m$^3$] sont employées en tant que valeur de sortie équivalente d'indice de réfraction $U_O$ et valeur de sortie équivalente de vitesse sonique $U_S$, et une valeur choisie parmi celles-ci dans une plage allant de 12,9 à 24,9 est utilisée en tant que facteur de correction $\alpha$ et une valeur choisie parmi celles-ci dans une plage allant de 0,064 à 0,089 est utilisée en tant que coefficient d'erreur $k_{CO2}$.

**4.** Procédé d'analyse de gaz selon la revendication 1, dans lequel, dans la procédure (1), lorsque la propriété physique particulière du gaz convertie à partir de la valeur d'indice de réfraction et de la valeur de vitesse sonique du gaz à analyser est la gravité spécifique, une valeur de gravité spécifique équivalente d'indice de réfraction $S_O$ par rapport à l'air et une valeur de gravité spécifique équivalente de vitesse sonique $S_S$ par rapport à l'air sont employées en tant que valeur de sortie équivalente d'indice de réfraction $U_O$ et valeur de sortie équivalente de vitesse sonique $U_S$, et une valeur choisie parmi celles-ci dans une plage allant de 12,9 à 24,9 est utilisée en tant que facteur de correction $\alpha$ et une valeur choisie parmi celles-ci dans une plage allant de 0,050 à 0,068 est utilisée en tant que coefficient d'erreur $k_{CO2}$.

**5.** Procédé d'analyse de gaz selon l'une quelconque des revendications 1 à 4, dans lequel le gaz à analyser est un gaz produit à partir de dioxyde de carbone et d'hydrogène par une réaction de méthanisation.

**6.** Analyseur de gaz permettant de calculer une concentration de chaque composant gazeux d'un gaz à analyser qui est un mélange gazeux majoritairement composé de méthane gazeux et qui contient de l'hydrogène gazeux et/ou du dioxyde de carbone gazeux,
l'analyseur de gaz comprenant un dispositif de calcul de concentration de gaz (25) configuré pour calculer la concentration de chaque composant gazeux du gaz à analyser grâce au procédé d'analyse de gaz selon l'une quelconque des revendications 1 à 5.

**7.** Analyseur de gaz selon la revendication 6, comprenant : un dispositif de mesure de sortie équivalente d'indice de réfraction (10) configuré pour mesurer un indice de réfraction du gaz à analyser pour obtenir ainsi une valeur de sortie équivalente d'indice de réfraction pour la propriété physique particulière du gaz ; et un dispositif de mesure de sortie équivalente de vitesse sonique (15) configuré pour mesurer une vitesse sonique du gaz à analyser pour obtenir ainsi une valeur de sortie équivalente de vitesse sonique pour la propriété physique particulière du gaz.

Fig. 1

Fig. 2

**EP 3 454 059 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005121648 A
- WO 2016014270 A1